Europäisches Patentamt

European Patent Office

Office européen des brevets

(19)

(11) Numéro de publication : **0 277 866 B1**

(12) # FASCICULE DE BREVET EUROPEEN

(45) Date de publication du fascicule du brevet :
28.08.91 Bulletin 91/35

(51) Int. Cl.⁵ : **B65D 90/58, D21B 1/34,**
**F16K 3/02**

(21) Numéro de dépôt : 88400140.5

(22) Date de dépôt : 22.01.88

(54) Vanne de vidange pour appareils de traitement de vieux papiers.

(30) Priorité : 30.01.87 FR 8701139

(43) Date de publication de la demande :
10.08.88 Bulletin 88/32

(45) Mention de la délivrance du brevet :
28.08.91 Bulletin 91/35

(84) Etats contractants désignés :
DE ES FR GB IT SE

(56) Documents cités :
DE-A- 3 149 135
DE-A- 3 516 356
US-A- 2 778 319
US-A- 3 559 949
US-A- 3 626 866

(73) Titulaire : E. + M. Lamort Société Anonyme
dite :
rue de la Fontaine Ludot
F-51300 Vitry-le-François (FR)

(72) Inventeur : Lamort, Jean-Pierre
3, boulevard Carnot
F-51300 Vitry-le-François (FR)

(74) Mandataire : Loyer, Bertrand et al
Cabinet Pierre Loyer 77, rue Boissière
F-75116 Paris (FR)

**Description**

La présente invention concerne les vannes de vidange pour les appareils de traitement de vieux papiers.

Le recyclage des vieux papiers représente une large part dans la production de papier, et la présence d'impuretés ou contaminants mélangés aux vieux papiers, par exemple les objets encombrants, métalliques, les matières plastiques, etc..., pose d'importants problèmes, notamment au niveau des vannes d'évacuation des appareils situés dans les premières étapes de traitement où le vieux papier est transformé en une pâte encore grossière.

Les plus grosses de ces impuretés sont éliminées dans ces premières étapes et en général par des procédés qui fonctionnent de manière discontinue, les écoulements de produit étant contrôlés par des vannes : par exemple on ouvre la vanne pour laisser s'évacuer les impuretés et on la referme ensuite pour exécuter un nouveau cycle de traitement.

Ces vannes sont généralement du type dit "à pelle" ou "à pelle traversante" ou "à guillotine", ce qui permet une ouverture ou une fermeture rapide de la canalisation contrôlée. Cependant lorsque les contaminants sont évacués d'un appareil, soit pour être rejetés à l'extérieur soit pour être lavés dans un autre appareil, certains d'entre eux se logent dans la glissière de la vanne ou bien se coincent dans le passage d'ouverture de la vanne (tiges métalliques ou autres objets encombrants) ou encore déforment, au moment de la fermeture, l'extrémité de la pelle empêchant par la suite son bon fonctionnement. En outre les sels présents en abondance dans les eaux de traitement sont à l'origine d'une importante corrosion des pelles, même lorsqu'elles sont en acier inoxydable, et celles-ci coincent, grippent. Ces pannes et avaries entraînent l'arrêt du fonctionnement de l'installation, des pertes importantes de matières et de graves problèmes de pollution.

Une variante de ce type est décrite au document US-A-2778319. Elle comporte un orifice de vidange par gravité, et une plaque d'obturation mobile horizontalement dans une glissière formée entre deux éléments superposés. La plaque est conformée en forme de coin, les deux faces supérieures et inférieures formant un angle. La plaque circule dans la glissière et sa face inférieure s'appuie sur des éléments transversaux de l'élément inférieur pour venir obturer l'orifice supérieur.

Cependant cette vanne ne peut convenir qu'à la vidange de matériaux pulvérulents : la présence d'une glissière et d'éléments inférieurs sur la trajectoire de la vidange est totalement incompatible avec l'élimination des impuretés de grandes tailles présente dans la pâte à papier.

L'invention a pour objectif de remédier à ces inconvénients et a pour objet une vanne de vidange pour appareil de traitement de vieux papiers comportant :

- un orifice de vidange par gravité,
- une plaque d'obturation de dimensions au moins égales à celles de l'orifice, le plan de la section de l'orifice et la surface supérieure de la plaque étant inclinés d'un angle $\alpha$ par rapport à l'horizontale, l'inclinaison de la plaque restant constante lors de son déplacement au moins à proximité immédiate de l'orifice,
- un moyen de déplacement de la plaque tel qu'elle se déplace dans une direction qui s'écarte et se rapproche de l'orifice à la fois perpendiculairement et parallèlement au plan de section de sortie.

Une telle vanne est connue du document US-A-2778319. Selon l'invention, la vanne est caractérisée en ce que, en combinaison :

— la plaque d'obturation est rigide de telle sorte qu'elle ne se déforme pas ni au moment de la fermeture ni sous le poids du vieux papier contenu dans l'appareil,

— la face supérieure de la plaque d'obturation comporte un revêtement élastique d'étanchéité et de protection d'épaisseur substancielle,

— l'inclinaison $\alpha$ est comprise entre 3 et 30° par rapport à l'horizontale,

— l'espace situé sous la plaque est libre de telle sorte que la plaque est appliquée par le moyen de déplacement, et en ce qu'elle comporte une conduite d'alimentation en eau munie d'au moins une tête d'arrosage du type pulvérisateur ou autre, disposée de façon à projeter de l'eau sur la plaque lorsque la vanne est ouverte.

En outre la vanne de vidange selon l'invention est remarquable par les caractéristiques suivantes :

— la plaque d'obturation comporte à son extrémité postérieure et latéralement des bords pliés vers le haut, destinés à éviter les éclaboussures vers l'extérieur notamment au moment de l'ouverture de la vanne et à augmenter la rigidité de la plaque.

— le revêtement est maintenu sur la plaque sur ses bords antérieurs et postérieurs repliés.

— la plaque comporte des galets de déplacements, mobiles sur des rails de roulement et de guidage, lesquels sont fixés par rapport à la section de sortie inclinée.

— la vanne comporte un détecteur de présence de la plaque d'obturation en position de vanne ouverte, relié à l'alimentation en eau de la tête d'arrosage.

— la sortie de vidange est munie d'une conduite, faisant partie intégrante de l'appareil, et elle comporte une bride d'adaptation. La vanne comporte, supérieurement une conduite munie à son extrémité supérieure d'une bride destinée à être montée sur la bride d'adaptation et présentant inférieurement une extrémité cylindrique de section de sortie inclinée selon l'angle α. Les rails de roulements et de guidage sont solidaires de la conduite supérieure.

La vanne ainsi constituée, est débarrassée à chaque ouverture, des impuretés qui peuvent être déposées sur la périphérie de la plaque.

D'autre part en cas de présence d'un corps étranger dur, une barre par exemple, l'inclinaison de la plaque ne coince pas la barre aussi violemment qu'avec une classique vanne à pelle.

Afin de mieux comprendre l'invention on a représenté au dessin annexé :

— figure 1 un schéma de profil de la vanne de vidange selon l'invention ;

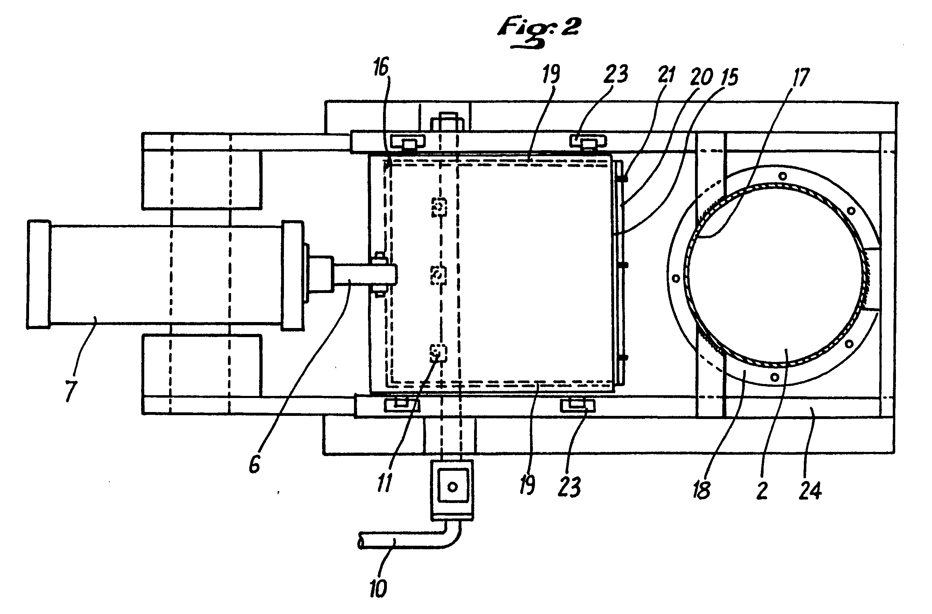

— figure 2 une vue schématique de dessous de la vanne de la figure 1.

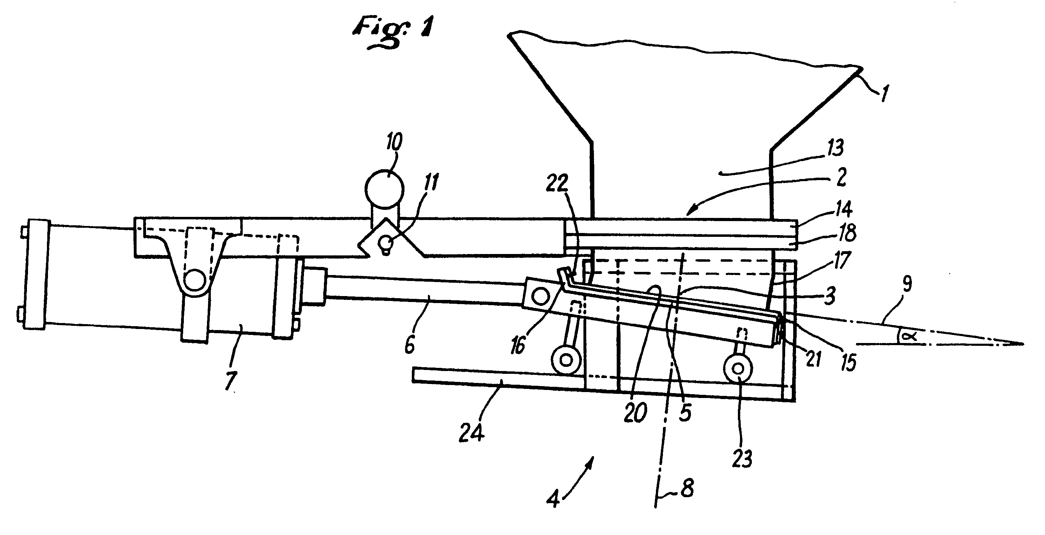

Comme le montre la figure 1 l'appareil 1 de traitement de vieux papiers comporte un orifice 2, de vidange par gravité. Le plan de la section à la sortie 3, de l'orifice 2 est incliné d'un angle α par rapport à l'horizontale. La vanne 4 comporte une plaque d'obturation 5, plane, rigide, de dimensions au moins égales à celles de la sortie 3, montée solidement à l'extrémité d'une tige 6 d'un vérin hydraulique 7 ou de tout autre moyen de déplacement équivalent de sorte que d'une part lorsque le vérin 7 se rétracte, la plaque 5 se déplace en s'écartant et en s'éloignant simultanément de l'orifice de sortie 3 ouvrant ainsi l'orifice de vidange et lorsque le vérin 7 s'étend en poussant la tige 6, la plaque 5 se déplace en sens inverse en se rapprochant de la section de sortie 3. En outre pendant son déplacement l'inclinaison de la plaque reste constante. De la sorte, la plaque 5 ne glisse pas transversalement à l'orifice 2 contre le plan de la section 3 à la manière d'une vanne à pelle, mais elle se déplace simultanément dans deux directions : une direction dans l'axe 8 de sortie (mouvement d'écartement) et une direction 9 perpendiculaire à l'axe, dans le plan de la section (mouvement d'éloignement de la plaque).

L'angle d'inclinaison est compris entre 3° et 30° et de préférence est de l'ordre de 8°. Il est choisi de manière que la composante des forces de gravité dans l'axe du vérin soit faible devant la composante verticale, afin que l'effort de fermeture du vérin ne soit pas trop grande. Il est important en effet que le vérin ne puisse pas être brusquement repoussé, en cas de panne du compresseur. Inversement un angle trop faible apporterait des frottements.

Dans l'exemple de réalisation la direction du déplacement imposée par le vérin 7 est constante et le parcours linéaire, mais selon le dispositif de commande (biellettes ou autre) le parcours de la plaque peut être courbe, et l'inclinaison de la plaque peut varier ; ce qui est important est que l'inclinaison de la plaque soit constante lorsqu'elle se déplace au voisinage immédiat de l'orifice de façon que la plaque soit, ou bien totalement en contact et l'orifice est complètement fermé, ou bien pas du tout en contact et l'orifice est ouvert.

Le dessin montre en outre un dispositif de nettoyage de la plaque 5. Ce dispositif comporte une conduite 10 d'alimentation d'eau, et au moins une extrémité comportant une tête d'arrosage 11 du type pulvérisateur ou autre, pulvérisant chacune un jet orienté vers la plaque 5 lorsque celle-ci est dans une position la plus éloignée de l'orifice de vidange 2 (position vanne 4 ouverte).

Un détecteur non représenté, de présence de la plaque, dans cette position la plus éloignée, commande l'alimentation en eau du ou des pulvérisateurs 11, de telle sorte que lorsque la vanne est ouverte et la plaque immobile, un jet d'eau lave toute sa surface éliminant ainsi toutes les impuretés éventuelles qui pourraient s'y être déposées et diminuant la corrosion notamment sur les bords, lesquels assurent le contact et l'étanchéité.

La vanne 4 ainsi constituée permet d'ouvrir et fermer l'orifice 2 sans frottement de la plaque 5 contre l'extrémité de l'orifice, ce qui élimine les coincements précédents des pelles dans leur glissière.

En outre le déplacement de la plaque 5 d'obturation par écartement et éloignement et inversement, permet d'éviter de coincer brutalement des impuretés contre le bord de la plaque au moment de la fermeture : en effet si une impureté est présente à ce moment, prise entre le bord de la plaque et le bord de l'orifice, elle se déforme autour des contours des bords respectifs sans se bloquer dans la vanne. Pour dégager cette impureté il suffit de rouvrir la vanne : soit elle tombe d'elle-même de la sortie 3, soit elle est éliminée de la plaque 5 sous l'action du jet d'eau.

Dans une variante de réalisation, l'orifice de vidange 2 de l'appareil 1 comporte une conduite 13 munie à son extrémité d'une bride 14. On dispose sous cette conduite 13 une autre conduite 17 comportant à son extrémité une bride 18 destinée à être montée et serrée sur la bride 14 et à l'autre extrémité une sortie 3 cylindrique de section circulaire inclinée d'un angle α, par rapport à l'horizontale, sur laquelle la plaque d'obturation 5 vient s'appuyer.

Cette conduite 17 a la fonction d'un embout d'adaptation et de montage sur la sortie de vidange 2.

La plaque d'obturation 5 est repliée sur ses bords :

— le bord antérieur 15 est plié vers le bas
— le bord postérieur 16, vers l'arrière, est plié vers le haut et les bords latéraux 19 sont également pliés vers le haut de façon à éviter les projections de liquides vers l'extérieur au moment de l'ouverture ou lorsque la plaque est rincée par les têtes d'arrosage 11.

En outre le fait de plier la plaque d'obturation agit dans le sens de raidissement de cette surface, et évite des déformations sous le poids du liquide présent dans l'appareil.

La face supérieure de la plaque, orientée vers le haut, comporte un revêtement élastique 20, du type caoutchouc ou plastique mou, ou autre, d'une épaisseur substantielle.

Ce revêtement est destiné à assurer, au moment de la fermeture de la vanne, un bon contact entre la surface plus ou moins plane de la plaque 5 et les bords du tube 17, la souplesse du matériau lui permettant de s'écraser et de s'étirer contre les bords sous la pression de fermeture dûe au vérin.

Le revêtement est maintenu sur la plaque par deux attaches démontables 21, 22 situées sur les rebords d'extrémité 15 et 16, cette disposition permettant d'une part ses déformations élastiques et d'autre part son remplacement en cas d'usure.

En outre l'utilisation d'un revêtement de ce type protège la surface métallique contre la corrosion.

La plaque comporte en outre des galets 23 de déplacements horizontaux. Ces galets sont mobiles sur des rails 24 de roulement et de guidage. Ce sont des rails de roulement au sens où ils représentent un support pour les galets, fixé horizontalement ; ce sont des rails de guidage car ils maintiennent la direction de déplacement de la plaque par rapport à l'orifice 3, qui ne peut pas dévier au cours de son déplacement.

Les rails 24 sont fixes par rapport à la section de sortie 3 et dans l'exemple illustré ils sont montés solidaires de la conduite 17.

## Revendications

1. Vanne de vidange pour appareil de traitement de vieux papiers comportant :
   - un orifice de vidange (2) par gravité ;
   - une plaque d'obturation (5) de dimensions au moins égales à celles de l'orifice, le plan de la section de l'orifice et la surface supérieure de la plaque étant inclinés d'un angle $\alpha$ par rapport à l'horizontale, l'inclinaison de la plaque restant constante lors de son déplacement au moins à proximité immédiate de l'orifice ;
   - un moyen de déplacement (6, 7) de la plaque (5) tel qu'elle se déplace dans une direction qui s'écarte et se rapproche de l'orifice (2) à la fois perpendiculairement et parallèlement au plan de section de sortie ;
   caractérisée en ce que, en combinaison :
   — la plaque d'obturation (5) est rigide de telle sorte qu'elle ne se déforme pas ni au moment de la fermeture ni sous le poids du vieux papier contenu dans l'appareil ;
   — la face supérieure de la plaque d'obturation (5) comporte un revêtement élastique (20) d'étanchéité et de protection d'épaisseur substantielle ;
   — l'inclinaison $\alpha$ est comprise entre 3 et 30° par rapport à l'horizontale,

— l'espace situé sous la plaque (5) est libre de telle sorte que la plaque est appliquée par le moyen de déplacement (6, 7), et en ce qu'elle comporte une conduite (10) d'alimentation en eau munie d'au moins une tête d'arrosage (11) du type pulvérisateur ou autre, disposée de façon à projeter de l'eau sur la plaque (5) lorsque la vanne est ouverte.

2. Vanne de vidange selon la revendication 1 caractérisée en ce que la plaque d'obturation (5) comporte à son extrémité postérieure et latéralement des bords pliés (16, 19) vers le haut, destinés à éviter les éclaboussures vers l'extérieur notamment au moment de l'ouverture de la vanne et à augmenter la rigidité de la plaque.

3. Vanne de vidange selon la revendication 3 caractérisée en ce que le revêtement est maintenu sur la plaque sur ses bords antérieurs (15) et postérieurs (16) repliés.

4. Vanne de vidange selon l'une quelconque des revendications précédentes caractérisée en ce que la plaque comporte des galets (23) de déplacements, mobiles sur des rails (24) de roulement et de guidage, lesquels sont fixés par rapport à la section de sortie (3) inclinée.

5. Vanne de vidange selon la revendication 2 caractérisée en ce qu'elle comporte un détecteur de présence (12) de la plaque d'obturation (5) en position de vanne ouverte, relié à l'alimentation en eau de la tête d'arrosage (11).

6. Vanne de vidange selon la revendication 1, pour appareil de vieux papiers (1) comportant une sortie de vidange munie d'une conduite (13), faisant partie intégrante de l'appareil (1), elle-même munie à son extrémité d'une bride (14) d'adaptation, caractérisée en ce qu'elle comporte supérieurement une conduite (17) munie à son extrémité supérieure d'une bride (18) destinée à être montée sur la bride (14), et présentant du côté inférieur une extrémité cylindrique de section de sortie (3) inclinée selon l'angle $\alpha$.

## Patentansprüche

1. Auslaßschieber für Altpapieraufbereitungsanlagen mit :
   - einer Schwerkraftablaßöffnung (2),
   - einer Verschlußplatte (5) von zumindest gleicher Größe wie die Öffnung, wobei die Ebene des Öffnungsquerschnitts und die Plattenoberseite im Vergleich zur Waagrechten einen Neigungswinkel $\alpha$ aufweisen und die Plattenneigung während der Verstellung zumindest in unmittelbarer Nähe der Öffnung konstant bleibt,
   - einer Verstellvorrichtung (6, 7) der Platte (5) zur Verstellung weg von der bzw. zur Öffnung (2) in zur Austrittsquerschnittsebene sowohl rechtwinkliger wie auch paralleler Richtung, dadurch gekennzeichnet, daß zugleich :
— die Verschlußplatte (5) starr ist, so daß sie sich weder beim Schließen, noch unter dem Gewicht des in der Anlage enthaltenen Altpapiers verformt,
— die Oberseite der Verschlußplatte (5) einen ziemlich dicken elastischen Abdicht- und Schutzbelag (20) besitzt,
— die Neigung einen Winkel α im Vergleich zur Waagrechten zwischen 3 und 30° aufweist,
— der Raum unter der Platte (5) frei ist, so daß die Platte durch die Verstellvorrichtung (6, 7) bewegt werden kann und eine Wasserzuleitung (10) mit mindestens einem als Sprühkopf oder anders ausgestalteten Spritzkopf besitzt, der so angeordnet ist, daß er bei offenem Ventil Wasser auf die Platte (5) spritzt.

2. Auslaßschieber nach Anspruch 1, dadurch gekennzeichnet, daß die Verschlußplatte (5) hinten und seitlich nach oben gebogene Ränder (16, 19) aufweist, um Spritzer nach außen, vor allem bei Öffnen des Schiebers, zu vermeiden und um die Festigkeit der Platte zu erhöhen.

3. Auslaßschieber nach Anspruch 1, dadurch gekennzeichnet, daß der Belag mittels der vorderen (15) und hinteren (16) umgebogenen Ränder gehalten wird.

4. Auslaßschieber nach Anspruch 1-3, dadurch gekennzeichnet, daß die Platte auf Lauf- und Führungsschienen (24) laufende Rollen (23) zur Verstellung aufweist, die entsprechend dem geneigten Austrittsquerschnitt (3) befestigt sind.

5. Auslaßschieber nach Anspruch 2, dadurch gekennzeichnet, daß er einen Stellungssensor (12) der Verschlußplatte (5) in offener Schieberposition besitzt, der mit der Wasserspeisung des Spritzkopfs (11) verbunden ist.

6. Auslaßschieber nach Anspruch 1 für Altpapieranlagen (1) mit einer Ablaßöffnung mit einem Leitungsstutzen (13), der fester Bestandteil der Anlage (1) ist und der an seinem Ende einen Adapterflansch (14) aufweist, dadurch gekennzeichnet, daß er oben einen Leitungsstutzen (17) mit einem am oberen Ende angebrachten Flansch (18) aufweist, der am Flansch (14) zu befestigen ist, und unten einen runden, im Winkel α geneigten Austrittsquerschnitt (3) besitzt.

## Claims

1. An emptying valve for a wastepaper processing apparatus comprising :
— a gravity operated emptying orifice (2) ;
— a disk seal (5) having at least the same dimensions as the orifice, the plane of the orifice section and the upper surface of the disk being inclined at an angle α with regard to the horizontal line, the inclination of the disk being constant during its shifting movement, at least in immediate proximity to the orifice ;
— means (6, 7) for shifting the disk (5) such that the disk is moved in a direction towards a remote and a close position with regard to the orifice (2), perpendicular and simultaneously parallel to the plane of the outlet section ;
characterized by, in combination, :
— the disk seal (5) is rigid so as not to be deformed neither at the closing moment, nor under the pressure from the weight of wastepaper contained in the apparatus ;
— the upper surface of the disk seal (5) comprises an elastic sealing and protection coating (20) having a substantial thickness ;
— the α inclination is comprised between 3 and 30° with regard to the horizontal line ;
— the space under the disk (5) is free so that the disk is applied by the shifting means (6, 7), and
— a water supply conduit (10) having at least one sprinkler head (11) of the sprayer type or other, placed in order to throw out water onto the disk (5) when the valve is opened.

2. An emptying valve as claimed in Claim 1, characterized in that the seal disk (5) comprises, at its back and sides, upwards bent edges intended to avoid outwardly directed splashes, especially when opening the valve, and to increase the rigidity of the disk.

3. An emptying valve as claimed in Claim 2, characterized in that the coating is maintained on the disk on its back and side edges which are bent.

4. An emptying valve as claimed in any of the preceding Claims, characterized in that the disk comprises moving wheels (23), movables along rolling and guiding rails (24) which are fixed with regard to the inclined output section (3).

5. An emptying valve as claimed in Claim 2, characterized by a detector (12) detecting the presence of the seal disk (5) when the valve is in its opened position, the detector being connected to the water supply of the sprinkler head (11).

6. An emptying valve as claimed in Claim 1, for a wastepaper processing apparatus (1) comprising an emptying outlet provided with a conduit (13) integrated with the apparatus (1), the conduit being at its end provided with a matching flange (14), characterized by a conduit (17) disposed in its upper part and comprising at its upper end a flange (18) intended to be mounted onto the flange (14), this conduit having at its lower side a cylindrical end forming an output section (3) inclined at the angle α.

Fig. 1

Fig. 2

EP 0 277 866 B1